# EUROPEAN PATENT SPECIFICATION

(11) **EP 3 221 107 B1**
(45) Date of publication and mention of the grant of the patent: **04.11.2020**
(21) Application number: 15861351.3
(22) Date of filing: 18.11.2015
(51) Int. Cl.: B29B 7/74, B29B 7/42, B29B 7/48, B29B 9/06, B29C 48/02, B29C 48/05, B29C 48/285, B29C 48/76, B29C 48/92, B29B 7/72, B29B 9/16, B29B 17/00, B29K 105/26, B29K 67/00, B29C 48/00, B29C 48/03, B29C 48/385, B29C 48/425, B29C 48/435, B29C 48/69

(54) **METHOD FOR MANUFACTURING BULKED CONTINUOUS FILAMENTS**
VERFAHREN ZUR MASSENHERSTELLUNG VON ENDLOSFILAMENTEN
PROCÉDÉ DE FABRICATION DE FILAMENTS CONTINUS GONFLANTS

(30) Priority: 18.11.2014 US 201414546847
(43) Date of publication of application: 27.09.2017
(60) Divisional application: 20198756.7
(73) Proprietor: Mohawk Industries, Inc., Marietta, Georgia 30062 (US)
(72) Inventor: CLARK, Thomas R., Chattanooga, Tennessee 37415 (US)
(74) Representative: Schacht, Benny Marcel Corneel
(86) International application number: PCT/US2015/061288
(87) International publication number: WO 2016/081568

(56) References cited:
- EP-A1- 0 881 054
- WO-A1-01/21373
- WO-A1-02/38276
- WO-A1-2008/017843
- AU-A1- 2014 215 998
- DE-A1-102006 033 089
- US-A- 5 623 012
- US-A1- 2002 036 361
- US-A1- 2004 072 920
- US-A1- 2005 056 961
- US-A1- 2005 062 186
- US-A1- 2010 133 717
- US-A1- 2014 225 293
- US-A1- 2014 225 293

## Description

### BACKGROUND

Because pure virgin PET polymer is more expensive than recycled PET polymer, and because of the environmental benefits associated with using recycled polymer, it would be desirable to be able to produce bulked continuous carpet filament from 100% recycled PET polymer (e.g., PET polymer from post-consumer PET bottles). US 2014/0225293 A1 discloses a process to provide bulked continuous filaments where the molten polymer, molten by means of a multi-screw extruder with a multi-rotating screw section, are spun out directly after said multi-screw extruder.

### SUMMARY

According to the invention, a method of manufacturing PET nurdles according to claim 1 is provided, said method comprising:
providing a multi-screw extruder (400) comprising a multi-rotating screw section that comprises:
   (i) a first satellite screw extruder, said first satellite screw extruder comprising a first satellite screw (425A-H) that is mounted to rotate about a central axis of said first satellite screw;
   (ii) a second satellite screw extruder, said second satellite screw extruder comprising a second satellite screw (425A-H) that is mounted to rotate about a central axis of said second satellite screw; and
   (iii) a pressure regulation system that is adapted to maintain a pressure within said first and second satellite screw extruders below about 18 millibars;
using said pressure regulation system to reduce a pressure within said first and second satellite screw extruders to below about 18 millibars;
while maintaining said pressure within said first and second satellite screw extruders below about 18 millibars, passing a melt comprising recycled PET through said multi-screw extruder (400) so that: (1) a first portion of said melt passes through said first satellite screw extruder, and (2) a second portion of said melt passes through said second satellite screw extruder;
after said step of passing said melt of recycled PET through said multi-screw extruder (400), pelletizing said polymer melt into a plurality of PET nurdles,
characterized in that pelletizing said polymer melt comprises:
   passing said polymer melt through a cooling bath to form a plurality of polymer strands, said cooling bath is configured to maintain a temperature of between about 140 degrees Celsius and about 230 degrees Celsius within said cooling bath to at least partially harden said polymer melt into said plurality of polymer strands; and after said step of passing said polymer melt through said cooling bath, forming said plurality of polymer strands into said plurality of PET nurdles.

### BRIEF DESCRIPTION OF THE DRAWINGS

Having described various embodiments in general terms, reference will now be made to the accompanying drawings, which are not necessarily drawn to scale, and wherein:

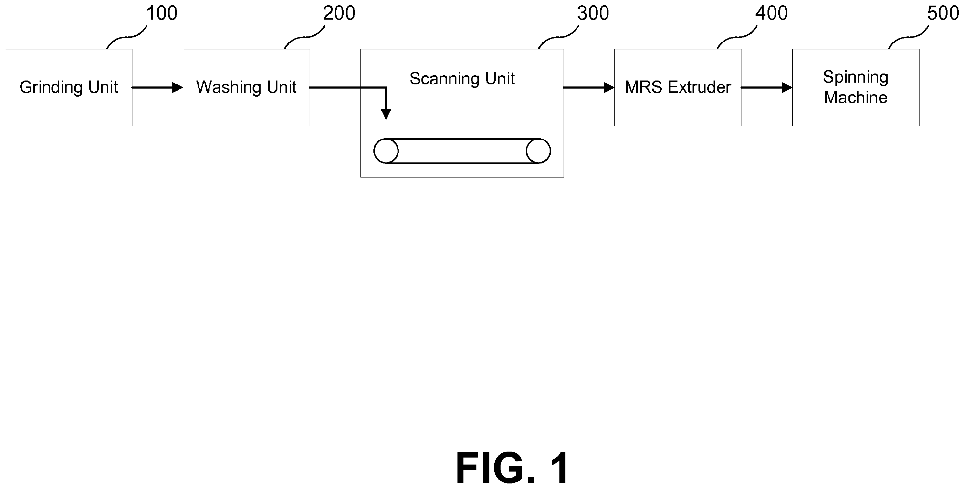

FIG. 1 depicts a process flow, according to a particular embodiment, for manufacturing bulked continuous carpet filament.
FIG. 2 is a perspective view of an multi-rotating screw ("MRS") extruder that is suitable for use in the process of FIG. 1.
FIG. 3 is a cross-sectional view of an exemplary MRS section of the MRS extruder of FIG. 2.
FIG. 4 depicts a process flow depicting the flow of polymer through an MRS extruder and filtration system according to a particular embodiment.
FIG. 5 is a high-level flow chart of a method, according to various embodiments, of manufacturing bulked continuous carpet filament.

### DETAILED DESCRIPTION OF VARIOUS EMBODIMENTS

Various embodiments will now be described in greater detail. Like numbers refer to like elements throughout.

### I. Overview

New processes for making fiber from recycled polymer (e.g., recycled PET polymer) are described below. In various embodiments, this new process: (1) is more effective than earlier processes in removing contaminates and water from the recycled polymer; and/or (2) does not require the polymer to be melted and cooled as many times as in earlier processes. In at least one embodiment, the improved process results in a recycled PET polymer having a polymer quality that is high enough that the PET polymer may be used in producing bulked continuous carpet filament from 100% recycled PET content (e.g., 100% from PET obtained from previously used PET bottles). In particular embodiments, the recycled PET polymer has an intrinsic viscosity of at least about 0.79 dL/g (e.g., of between about 0.79 dL/g and about 1.00 dL/g).

### II. More Detailed Discussion

A BCF (bulked continuous filament) manufacturing process, according to a particular embodiment, may generally be broken down into three steps: (1) preparing flakes of PET polymer from post-consumer bottles for use in the process; (2) passing the flakes through an extruder that melts the flakes and purifies the resulting PET polymer; and (3) feeding the purified polymer into a spinning machine that turns the polymer into filament for use in manufacturing carpets. These three steps are described in greater detail below.

### STEP 1: Preparing Flakes of PET Polymer from Post-Consumer Bottles

In a particular embodiment, the step of preparing flakes of PET polymer from post-consumer bottles comprises: (A) sorting post-consumer PET bottles and grinding the bottles into flakes; (B) washing the flakes; and (C) identifying and removing any impurities or impure flakes.

### A. Sorting Post-Consumer PET bottles and Grinding the Bottles into Flakes

In particular embodiments, bales of clear and mixed colored recycled post-consumer (e.g., "curbside") PET bottles (or other containers) obtained from various recycling facilities make-up the post-consumer PET containers for use in the process. In other embodiments, the source of the post-consumer PET containers may be returned 'deposit' bottles (e.g., PET bottles whose price includes a deposit that is returned to a customer when the customer returns the bottle after consuming the bottle's contents). The curbside or returned "post-consumer" or "recycled" containers may contain a small level of non-PET contaminates. The contaminants in the containers may include, for example, non-PET polymeric contaminants (e.g., PVC, PLA, PP, PE, PS, PA, etc.), metal (e.g., ferrous and non-ferrous metal), paper, cardboard, sand, glass or other unwanted materials that may find their way into the collection of recycled PET. The non-PET contaminants may be removed from the desired PET components, for example, through one or more of the various processes described below.

In particular embodiments, smaller components and debris (e.g., components and debris greater than 2 inches in size) are removed from the whole bottles via a rotating trammel. Various metal removal magnets and eddy current systems may be incorporated into the process to remove any metal contaminants. Near Infra-Red optical sorting equipment such as the NRT Multi Sort IR machine from Bulk Handling Systems Company of Eugene, Oregon, or the Spyder IR machine from National Recovery Technologies of Nashville, Tennessee, may be utilized to remove any loose polymeric contaminants that may be mixed in with the PET flakes (e.g., PVC, PLA, PP, PE, PS, and PA). Additionally, automated X-ray sorting equipment such as a VINYLCYCLE machine from National Recovery Technologies of Nashville, Tennessee may be utilized to remove remaining PVC contaminants.

In particular embodiments, a binary segregation of the clear materials from the colored materials is achieved using automated color sorting equipment equipped with a camera detection system (e.g., an Multisort ES machine from National Recovery Technologies of Nashville, Tennessee). In various embodiments, manual sorters are stationed at various points on the line to remove contaminants not removed by the sorter and any colored bottles. In particular embodiments, the sorted material is taken through a granulation step (e.g., using a 50B Granulator machine from Cumberland Engineering Corporation of New Berlin, Wisconsin) to size reduce (e.g., grind) the bottles down to a size of less than one half of an inch. In various embodiments, the bottle labels are removed from the resultant "dirty flake" (e.g., the PET flakes formed during the granulation step) via an air separation system prior to entering the wash process.

### B. Washing the Flakes

In particular embodiments, the "dirty flake" is then mixed into a series of wash tanks. As part of the wash process, in various embodiments, an aqueous density separation is utilized to separate the olefin bottle caps (which may, for example, be present in the "dirty flake" as remnants from recycled PET bottles) from the higher specific gravity PET flakes. In particular embodiments, the flakes are washed in a heated caustic bath to about 190 degrees Fahrenheit. In particular embodiments, the caustic bath is maintained at a concentration of between about 0.6% and about 1.2% sodium hydroxide. In various embodiments, soap surfactants as well as defoaming agents are added to the caustic bath, for example, to further increase the separation and cleaning of the flakes. A double rinse system then washes the caustic from the flakes.

In various embodiments, the flake is centrifugally dewatered and then dried with hot air to at least substantially remove any surface moisture. The resultant "clean flake" is then processed through an electrostatic separation system (e.g., an electrostatic separator from Carpco, Inc. of Jacksonville, Florida) and a flake metal detection system (e.g., an MSS Metal Sorting System) to further remove any metal contaminants that remain in the flake. In particular embodiments, an air separation step removes any remaining label from the clean flake. In various embodiments, the flake is then taken through a flake color sorting step (e.g., using an OPTIMIX machine from TSM Control Systems of Dundalk, Ireland) to remove any remaining color contaminants remaining in the flake. In various embodiments, an electro-optical flake sorter based at least in part on Raman technology (e.g., a Powersort 200 from Unisensor Sensorsysteme GmbH of Karlsruhe, Germany) performs the final polymer separation to remove any non-PET polymers remaining in the flake. This step may also further remove any remaining metal contaminants and color contaminants.

In various embodiments, the combination of these steps delivers substantially clean (e.g., clean) PET bottle flake comprising less than about 50 parts per million PVC (e.g., 25 ppm PVC) and less than about 15 parts per million metals for use in the downstream extrusion process described below.

### C. Identifying and Removing Impurities and Impure Flakes

In particular embodiments, after the flakes are washed, they are fed down a conveyor and scanned with a high-speed laser system **300**. In various embodiments, particular lasers that make up the high-speed laser system **300** are configured to detect the presence of particular contaminates (e.g., PVC or Aluminum). Flakes that are identified as not consisting essentially of PET may be blown from the main stream of flakes with air jets. In various embodiments, the resulting level of non-PET flakes is less than 25 ppm.

In various embodiments, the system is adapted to ensure that the PET polymer being processed into filament is substantially free of water (e.g., entirely free of water). In a particular embodiment, the flakes are placed into a pre-conditioner for between about 20 and about 40 minutes (e.g., about 30 minutes) during which the pre-conditioner blows the surface water off of the flakes. In particular embodiments, interstitial water remains within the flakes. In various embodiments, these "wet" flakes (e.g., flakes comprising interstitial water) may then be fed into an extruder (e.g., as described in Step 2 below), which includes a vacuum setup designed to remove - among other things - the interstitial water that remains present in the flakes following the quick-drying process described above.

### STEP 2: Using an Extrusion System to Melt and Purify PET Flakes

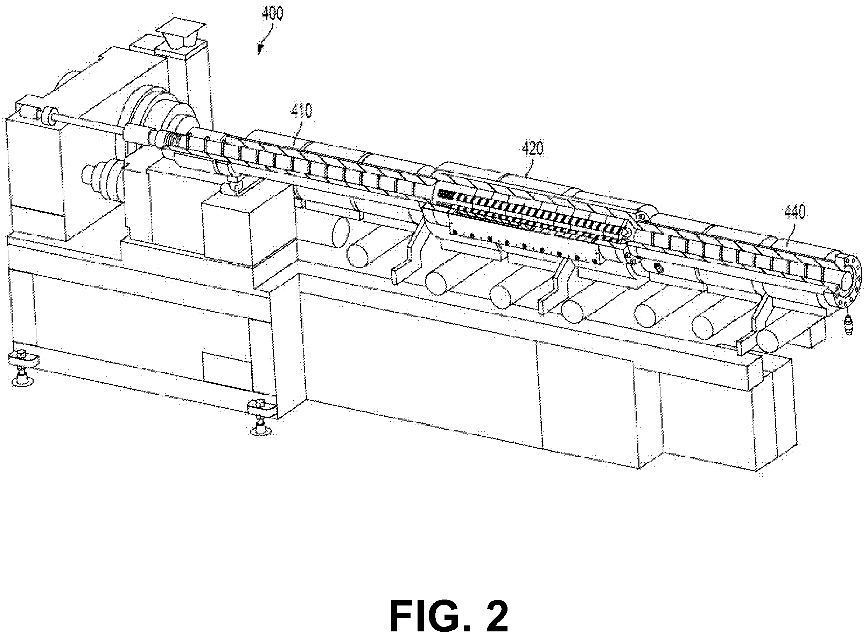

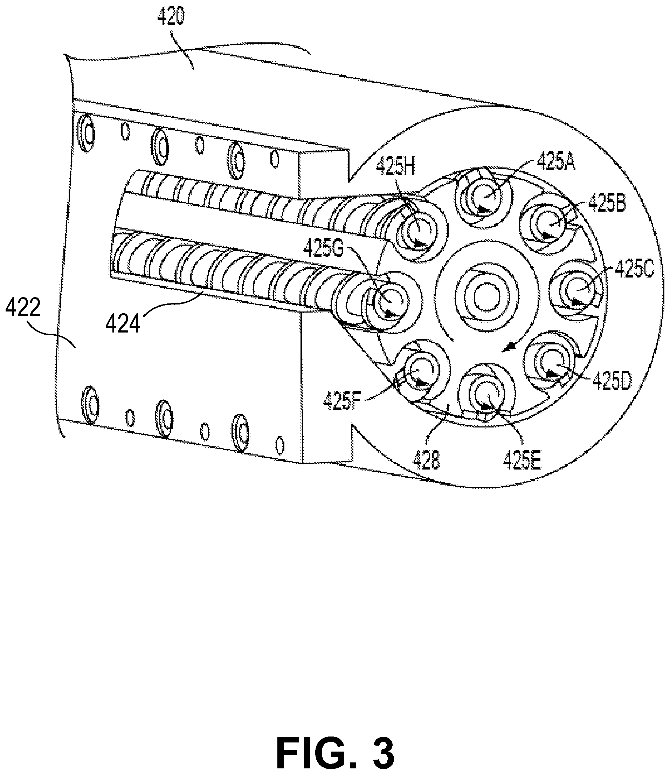

In particular embodiments, an extruder is used to turn the wet flakes described above into a molten recycled PET polymer and to perform a number of purification processes to prepare the polymer to be turned into BCF for carpet. As noted above, in various embodiments, after STEP 1 is complete, the recycled PET polymer flakes are wet (e.g., surface water is substantially removed (e.g., fully removed) from the flakes, but interstitial water remains in the flakes). In particular embodiments, these wet flakes are fed into a Multiple Rotating Screw ("MRS") extruder 400. In other embodiments, the wet flakes are fed into any other suitable extruder (e.g., a twin screw extruder, a multiple screw extruder, a planetary extruder, or any other suitable extrusion system). An exemplary MRS Extruder **400** is shown in Figures 2 and 3. A particular example of such an MRS extruder is described in U.S. Published Patent Application 2005/0047267, entitled "Extruder for Producing Molten Plastic Materials", which was published on March 3, 2005, and which is hereby incorporated herein by reference.

As may be understood from this figure, in particular embodiments, the MRS extruder includes a first single-screw extruder section **410** for feeding material into an MRS section **420** and a second single-screw extruder section **440** for transporting material away from the MRS section.

In various embodiments, the wet flakes are fed directly into the MRS extruder **400** substantially immediately (e.g., immediately) following the washing step described above (e.g., without drying the flakes or allowing the flakes to dry). In particular embodiments, a system that feeds the wet flakes directly into the MRS Extruder **400** substantially immediately (e.g., immediately) following the washing step described above may consume about 20% less energy than a system that substantially fully pre-dries the flakes before extrusion (e.g., a system that pre-dries the flakes by passing hot air over the wet flakes for a prolonged period of time). In various embodiments, a system that feeds the wet flakes directly into the MRS Extruder **400** substantially immediately (e.g., immediately) following the washing step described above avoids the need to wait a period of time (e.g., up to eight hours) generally required to fully dry the flakes (e.g., remove all of the surface and interstitial water from the flakes).

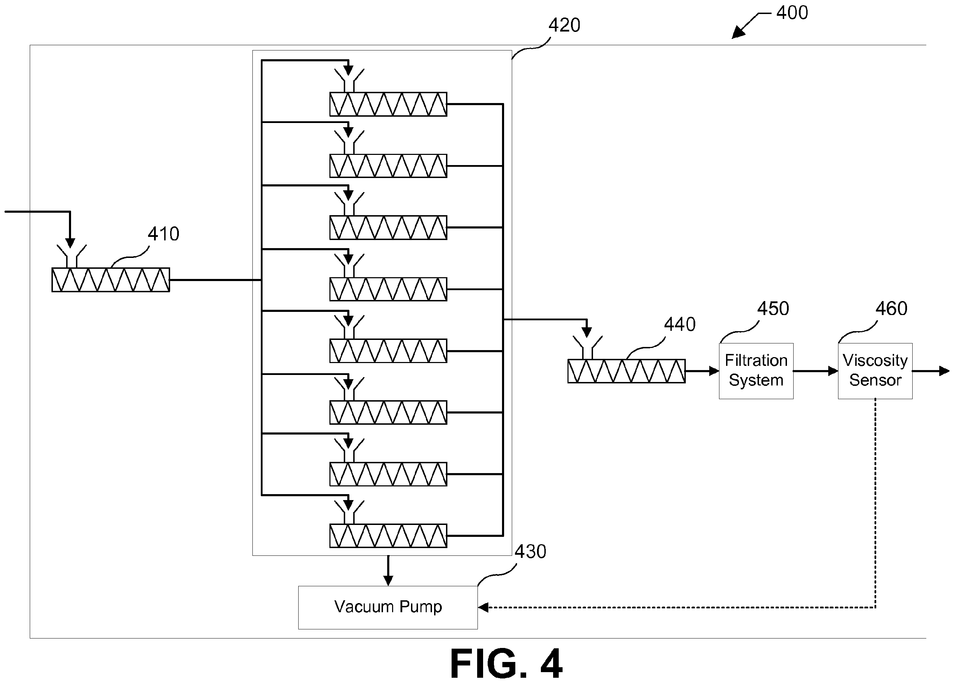

Figure 4 depicts a process flow that illustrates the various processes performed by the MRS Extruder **400** in a particular embodiment. In the embodiment shown in this figure, the wet flakes are first fed through the MRS extruder's first single-screw extruder section **410**, which may, for example, generate sufficient heat (e.g., via shearing) to at least substantially melt (e.g., melt) the wet flakes.

The resultant polymer melt (e.g., comprising the melted flakes), in various embodiments, is then fed into the extruder's MRS section **420**, in which the extruder separates the melt flow into a plurality of different streams (e.g., 4, 6, 8, or more streams) through a plurality of open chambers. Figure 3 shows a detailed cutaway view of an MRS Section **420** according to a particular embodiment. In particular embodiments, such as the embodiment shown in this figure, the MRS Section **420** separates the melt flow into eight different streams, which are subsequently fed through eight satellite screws **425A-H** of eight satellite screw extruders. As may be understood from Figure 2, in particular embodiments, these satellite screws are substantially parallel (e.g., parallel) to one other and to a primary screw axis of the MRS Machine **400**.

In the MRS section **420**, in various embodiments, the satellite screws **425A-H** may, for example, rotate faster than (e.g., about four times faster than) in previous systems. As shown in Figure 3, in particular embodiments: (1) the satellite screws **425A-H** are arranged within a single screw drum **428** that is mounted to rotate about its central axis; and (2) the satellite screws **425AH** are configured to rotate in a direction that is opposite to the direction in which the single screw drum rotates **428**. In various other embodiments, the satellite screws **425A-H** and the single screw drum **428** rotate in the same direction. In particular embodiments, the rotation of the satellite screws **425A-H** is driven by a ring gear. Also, in various embodiments, the single screw drum **428** rotates about four times faster than each individual satellite screw **425A-H**. In certain embodiments, the satellite screws **425A-H** rotate at substantially similar (e.g., the same) speeds.

In various embodiments, as may be understood from Figure 4, the satellite screws **425AH** are housed within respective extruder barrels, which may, for example be about 30% open to the outer chamber of the MRS section **420**. In particular embodiments, the rotation of the satellite screws **425A-H** and single screw drum **428** increases the surface exchange of the polymer melt (e.g., exposes more surface area of the melted polymer to the open chamber than in previous systems). In various embodiments, the MRS section **420** creates a melt surface area that is, for example, between about twenty and about thirty times greater than the melt surface area created by a co-rotating twin screw extruder. In a particular embodiment, the MRS section **420** creates a melt surface area that is, for example, about twenty five times greater than the melt surface area created by a co-rotating twin screw extruder

In various embodiments, the MRS extruder's MRS Section **420** is fitted with a Vacuum Pump **430** that is attached to a vacuum attachment portion **422** of the MRS section **420** so that the Vacuum Pump **430** is in communication with the interior of the MRS section via a suitable opening **424** in the MRS section's housing. In still other embodiments, the MRS Section **420** is fitted with a series of Vacuum Pumps. In particular embodiments, the Vacuum Pump **430** is configured to reduce the pressure within the interior of the MRS Section **420** to a pressure that is between about 0.5 millibars and about 5 millibars. In particular embodiments, the Vacuum Pump **430** is configured to reduce the pressure in the MRS Section **420** to less than about 1.5 millibars (e.g., about 1 millibar or less). The low-pressure vacuum created by the Vacuum Pump **430** in the MRS Section 420 may remove, for example: (1) volatile organics present in the melted polymer as the melted polymer passes through the MRS Section **420**; and/or (2) at least a portion of any interstitial water that was present in the wet flakes when the wet flakes entered the MRS Extruder **400**. In various embodiments, the low-pressure vacuum removes substantially all (e.g., all) of the water and contaminants from the polymer stream.

In a particular example, the Vacuum Pump **430** comprises three mechanical lobe vacuum pumps (e.g., arranged in series) to reduce the pressure in the chamber to a suitable level (e.g., to a pressure of about 1.0 millibar). In other embodiments, rather than the three mechanical lobe vacuum pump arrangement discussed above, the Vacuum Pump **430** includes a jet vacuum pump fit to the MRS extruder. In various embodiments, the jet vacuum pump is configured to achieve about 1 millibar of pressure in the interior of the MRS section **420** and about the same results described above regarding a resulting intrinsic viscosity of the polymer melt. In various embodiments, using a jet vacuum pump can be advantageous because jet vacuum pumps are steam powered and therefore substantially self-cleaning (e.g., self-cleaning), thereby reducing the maintenance required in comparison to mechanical lobe pumps (which may, for example, require repeated cleaning due to volatiles coming off and condensing on the lobes of the pump). In a particular embodiment, the Vacuum Pump **430** is a jet vacuum pump is made by Arpuma GmbH of Bergheim, Germany.

In particular embodiments, after the molten polymer is run through the multi-stream MRS Section **420**, the streams of molten polymer are recombined and flow into the MRS extruder's second single screw section **440**. In various embodiments, the single stream of molten polymer is next run through a filtration system **450** that includes at least one filter. In a particular embodiment, the filtration system **450** includes two levels of filtration (e.g., a 40 micron screen filter followed by a 25 micron screen filter). Although, in various embodiments, water and volatile organic impurities are removed during the vacuum process as discussed above, particulate contaminates such as, for example, aluminum particles, sand, dirt, and other contaminants may remain in the polymer melt. Thus, this filtration step may be advantageous in removing particulate contaminates (e.g., particulate contaminates that were not removed in the MRS Section **420**).

In particular embodiments, a viscosity sensor **460** (see Figure 4) is used to sense the melt viscosity of the molten polymer stream following its passage through the filtration system **450**. In various embodiments, the viscosity sensor **460**, measures the melt viscosity of the stream, for example, by measuring the stream's pressure drop across a known area. In particular embodiments, in response to measuring an intrinsic viscosity of the stream that is below a predetermined level (e.g., below about 0.8 g/dL), the system may: (1) discard the portion of the stream with low intrinsic viscosity; and/or (2) lower the pressure in the MRS Section **420** in order to achieve a higher intrinsic viscosity in the polymer melt. In particular embodiments, decreasing the pressure in the MRS Section **420** is executed in a substantially automated manner (e.g., automatically) using the viscosity sensor in a computer-controlled feedback control loop with the vacuum section **430**.

In particular embodiments, removing the water and contaminates from the polymer improves the intrinsic viscosity of the recycled PET polymer by allowing polymer chains in the polymer to reconnect and extend the chain length. In particular embodiments, following its passage through the MRS Section **420** with its attached Vacuum Pump **430**, the recycled polymer melt has an intrinsic viscosity of at least about 0.79 dL/g (e.g., of between about 0.79 dL/g and about 1.00 dL/g). In particular embodiments, passage through the low pressure MRS Section **420** purifies the recycled polymer melt (e.g., by removing the contaminants and interstitial water) and makes the recycled polymer substantially structurally similar to (e.g., structurally the same as) pure virgin PET polymer. In particular embodiments, the water removed by the vacuum includes both water from the wash water used to clean the recycled PET bottles as described above, as well as from unreacted water generated by the melting of the PET polymer in the single screw heater **410** (e.g., interstitial water). In particular embodiments, the majority of water present in the polymer is wash water, but some percentage may be unreacted water.

In particular embodiments, the resulting polymer is a recycled PET polymer (e.g., obtained 100% from post-consumer PET products, such as PET bottles or containers) having a polymer quality that is suitable for use in producing PET carpet filament using substantially only (e.g., only) PET from recycled PET products.

### Step 3: Purified PET Polymer Fed into Spinning Machine to be Turned into Carpet Yarn

In particular embodiments, after the recycled PET polymer has been extruded and purified by the above-described extrusion process, the resulting molten recycled PET polymer is fed directly into a BCF (or "spinning") machine **500** that is configured to turn the molten polymer into bulked continuous filament. For example, in various embodiments, the output of the MRS extruder **400** is connected substantially directly (e.g., directly) to the input of the spinning machine **500** so that molten polymer from the extruder is fed directly into the spinning machine **500**. This process may be advantageous because molten polymer may, in certain embodiments, not need to be cooled into pellets after extrusion (as it would need to be if the recycled polymer were being mixed with virgin PET polymer). In particular embodiments, not cooling the recycled molten polymer into pellets serves to avoid potential chain scission in the polymer that might lower the polymer's intrinsic viscosity.

In particular embodiments, the spinning machine **500** extrudes molten polymer through small holes in a spinneret in order to produce carpet yarn filament from the polymer. In particular embodiments, the molten recycled PET polymer cools after leaving the spinneret. The carpet yarn is then taken up by rollers and ultimately turned into filaments that are used to produce carpet. In various embodiments, the carpet yarn produced by the spinning machine **500** may have a tenacity between about 3 gram-force per unit denier (gf/den) and about 9 gf/den. In particular embodiments, the resulting carpet yarn has a tenacity of at least about 3 gf/den.

In particular embodiments, the spinning machine **500** used in the process described above is the Sytec One spinning machine manufactured by Oerlika Neumag of Neumuenster, Germany. The Sytec One machine may be especially adapted for hard-to-run fibers, such as nylon or solution-dyed fibers, where the filaments are prone to breakage during processing. In various embodiments, the Sytec One machine keeps the runs downstream of the spinneret as straight as possible, uses only one threadline, and is designed to be quick to rethread when there are filament breaks.

Although the example described above describes using the Sytec One spinning machine to produce carpet yarn filament from the polymer, it should be understood that any other suitable spinning machine may be used. Such spinning machines may include, for example, any suitable one-threadline or three-threadline spinning machine made by Oerlika Neumag of Neumuenster, Germany or any other company.

In various embodiments, the improved strength of the recycled PET polymer generated using the process above allows it to be run at higher speeds through the spinning machine 500 than would be possible using pure virgin PET polymer. This may allow for higher processing speeds than are possible when using virgin PET polymer.

### Summary of Exemplary Process

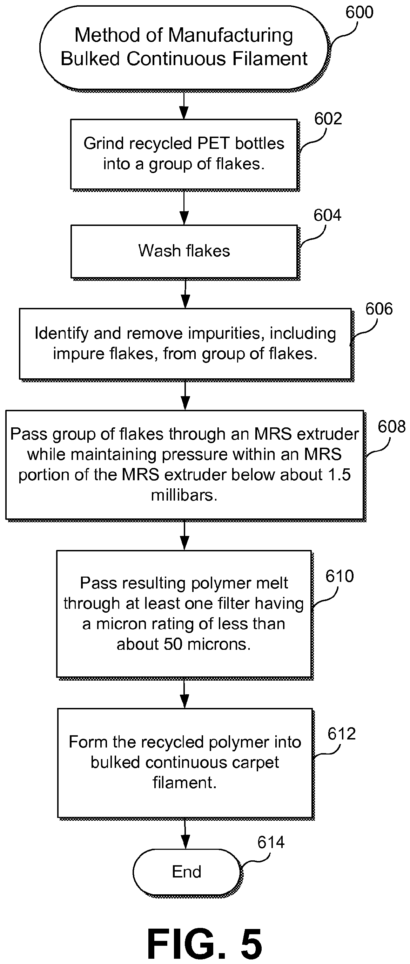

Figure 5 provides a high-level summary of the method of manufacturing bulked continuous filament described above. As shown in the figure, the method begins at Step **602**, where recycled PET bottles are ground into a group of flakes. Next, at Step **604**, the group of flakes is washed to remove contaminants from the flakes' respective outer surfaces. Next, at Step **606**, the group of flakes is scanned (e.g., using one or more of the methods discussed above) to identify impurities, including impure flakes. These impurities, and impure flakes, are then removed from the group of flakes.

Next, at Step **608**, the group of flakes is passed through an MRS extruder while maintaining the pressure within an MRS portion of the extruder below about 1.5 millibars. At Step **610**, the resulting polymer melt is passed through at least one filter having a micron rating of less than about 50 microns. Finally, at Step **612**, the recycled polymer is formed into bulked continuous carpet filament, which may be used in producing carpet. The method then ends at Step **614**.

### Alternative Embodiments

In particular embodiments, the system may comprise alternative components or perform alternative processes in order to produce substantially continuous BCF from 100% recycled PET, or other recycled polymer. Exemplary alternatives are discussed below.

### Non-MRS Extrusion System

In particular embodiments, the process may utilize a polymer flow extrusion system other than the MRS Extruder described above. The alternative extrusion system may include for example, a twin screw extruder, a multiple screw extruder, a planetary extruder, or any other suitable extrusion system. In a particular embodiment, the process may include a plurality of any combination of any suitable conical screw extruders (e.g., four twin screw extruders, three multiple screw extruders, etc.).

### Making Carpet Yarn from 100% Recycled Carpet

In particular embodiments, the process described above may be adapted for processing and preparing old carpet (or any other suitable post-consumer product) to produce new carpet yarn comprising 100% recycled carpet. In such embodiments, the process would begin by grinding and washing recycled carpet rather than recycled PET bottles. In various embodiments where old carpet is converted into new carpet yarn comprising 100% recycled carpet, the process may comprise additional steps to remove additional materials or impurities that may be present in recycled carpet that may not be present in recycled PET bottles (e.g., carpet backing, adhesive, etc.).

### Other Sources of Recycled PET

In various embodiments, the process described above is adapted for processing recycled PET from any suitable source (e.g., sources other than recycled bottles or carpet) to produce new carpet yarn comprising 100% recycled PET.

### The Use of a Crystallizer as Part of BCF Process

In various embodiments, the process for producing recycled BCF may further include a crystallizing step that utilizes one or more PET crystallizers. In particular embodiments, the system is configured to perform the crystallization step on the ground flakes prior to running the flakes through the one or more extruders (e.g., single screw extruder, MRS extruder, etc.). In particular embodiments, the PET crystallizer comprises a hopper screw (e.g., an auger), a stirring apparatus, and one or more blowers.

### Hopper Screw

In particular embodiments, the hopper screw is configured to feed PET flakes into the crystallizer. In various embodiments, the PET crystallizer is configured to feed the PET flakes into the crystallizer using the hopper screw relatively slowly.

### Stirring Apparatus

In various embodiments, the stirring apparatus may be operated, for example, by any suitable gear motor. In particular embodiments, the stirring apparatus is configured to at least partially reduce agglomeration (e.g., sticking or clumping of the flake) while the flake is at least partially crystallizing in the crystallizer. In particular embodiments, the stirring apparatus comprises the hopper screw.

### One or More Blowers

In various embodiments, the crystallizer further comprises one or more blowers configured to blow hot air over the flake as the flake passes through the crystallizer. In particular embodiments, the one or more blowers are configured to maintain a temperature within the crystallizer at least about 140 degree Fahrenheit. In other embodiments, the one or more blowers are configured to maintain the temperature in the crystallizer between about 140 degrees Fahrenheit and about 180 degrees Fahrenheit. In some embodiments, the one or more blowers are configured to blow hot air from a bottom portion of the crystallizer and draw air from an upper portion of the crystallizer.

In particular embodiments, the crystallizer at least partially dries the surface of the PET flakes. In various embodiments, the use of drier flakes may enable the system to run the flakes through the MRS extruder more slowly, which may allow for higher pressure within the MRS extruder during extrusion (e.g., may enable the system to maintain a higher pressure within the MRS extruder, rather than very low pressure). In various embodiments of the process, the pressure regulation system may be configured to maintain a pressure within the MRS extruder of between about 0 millibars and about 25 millibars. In particular embodiments, such as embodiments in which the PET flakes have been run through a crystallizer before being extruded in the MRS extruder, the pressure regulation system may be configured to maintain a pressure within the MRS extruder of about 0 and about 18 millibars. In other embodiments, the pressure regulation system may be configured to maintain a pressure within the MRS extruder between about 0 and about 12 millibars. In still other embodiments, the pressure regulation system may be configured to maintain a pressure within the MRS extruder between about 0 and about 8 millibars. In still other embodiments, the pressure regulation system may be configured to maintain a pressure within the MRS extruder between about 5 millibars and about 10 millibars. In particular embodiments, the pressure regulation system may be configured to maintain a pressure within the MRS extruder at about 5 millibars, about 6 millibars, about 7 millibars, about 8 millibars, about 9 millibars, or about any suitable pressure between about 0 millibars and about 25 millibars. It should be understood that the disclosure of any numerical ranges listed herein includes a disclosure of each distinct number within those numerical ranges. For example, the disclosure of a range of between about 10 millibars and about 15 millibars should also be understood to constitute a disclosure of about 11 millibars, about 12 millibars, about 13 millibars, about 13.5 millibars, etc...

In particular embodiments, the crystallizer causes the flakes to at least partially reduce in size, which may, for example, reduce a potential for the flakes to stick together. In particular embodiments, the crystallizer may particularly reduce stickiness of larger flakes, which may, for example, include flakes comprising portions of the ground PET bottles which may be thicker than other portions of the PET bottles (e.g., flakes from a threaded portion of the PET bottle on which a cap would typically be screwed).

### Use of Curbside Recycling v. Deposit Bottles in Process

In various embodiments, the system is configured to utilize recycled PET of varying quality in the process described above. For example, in various embodiments, the system is configured to produce bulked continuous carpet filament from PET derived from PET bottles sourced from curbside recycling sources (e.g., PET bottles that were collected as part of a general bulk recycling program or other recycling source) and/or deposit PET bottles (e.g., bottles returned as part of a deposit program). In various embodiments, Curbside recycled bottles may require more thorough processing in order to produce bulked continuous filament, as curbside recycled PET bottles may be mixed in with and otherwise include contaminants such as, for example: other recyclable goods (e.g., paper, other plastics, etc.), garbage, and other non-PET bottle items due to imperfect sorting of recycled goods or for any other reason. Deposit PET bottles may include PET bottles with fewer unwanted contaminants due in part because deposit PET bottles may be collected separately from other recyclable or disposable goods.

In various embodiments, curbside recycled PET bottles acquired during particular times of year may include more impurities and other contaminants than at other times of the year. For example, curbside recycled PET bottles collected during summer months may comprise a higher percentage of clear PET bottles (e.g., water bottles) at least in part due to additional water consumption during summer months.

In various embodiments, the system described above may be configured to adjust particular components of the process based at least in part on the source of recycled PET being used to produce the bulked continuous carpet filament. For example, because deposit PET bottles include fewer impurities that need to be removed during the initial cleaning and sorting phases of the process, the pressure regulation system may be configured to maintain a pressure within the MRS extruder that is higher than a pressure that it would be configured to maintain for flake derived from curbside recycled PET bottles. In a particular embodiments, the pressure regulation system may be configured to maintain a pressure within the MRS extruder of between about 0 millibars and about 12 millibars when flakes derived from deposit PET bottles are passing through the MRS extruder. In still other embodiments, the pressure regulation system may be configured to maintain a pressure within the MRS extruder of between about 5 millibars and about 10 millibars in such instances.

In various embodiments, the system is configured to determine a suitable pressure at which to maintain the pressure within the MRS extruder based at least in part on the source of the recycled PET. In other embodiments, the system is configured to omit one or more of the steps above or include one or more additional steps to the steps described above based at least in part on the source of the recycled PET.

### The Use of the BCF Process for Producing PET or Other Plastic Nurdles

In various embodiments, various steps of the BCF process described above may be utilized in the production of PET or other plastic pellets called nurdles. These nurdles may, in various embodiments, be used to produce any suitable PET or other suitable plastic product (e.g., bottles, containers, etc.) For example, following the MRS extrusion process described above, molten polymer may be cooled into a plurality of plastic pellets (e.g., following extrusion of the molten polymer). These at least approximately 100% recycled plastic pellets may then be used in the production of any suitable PET product, combined (e.g., mixed) with virgin PET pellets in any suitable ratio in order to produce any suitable PET or other product, and/or be put to any other suitable use.

In particular embodiments, the process may include maintaining a relatively low surface tension in the water bath, for example via introduction of one or more surfactants. In particular embodiments, surfactants may promote the migration of low surface energy hydrocarbons toward pellet surfaces, which may enhance surface crystallization and help to reduce the likelihood of agglomeration. Examples of useful surfactants include ethylene glycol trisiloxane, polyoxyethylene glycol monoalkyl ether with dodecanol, phospate based alkyl polyethylene oxide surfactants, Dynol-607 (Air Products), and Carbowet-106 (Air Products).

In particular embodiments, following water bath cooling, the system may be configured to at least partially wipe residual water from the surface of the resulting polymer strands, for example using any suitable suction air knife. The substantially dry, substantially solidified polymer strands may then be transported to a pelletizer and cut into pellets. In various embodiments, the strand pelletizing process described above may result in nurdles that are substantially cylindrical in shape.

### Conclusion

Although the vacuum system discussed above is described as being configured to maintain the pressure in the open chambers of the MRS extruder to about 1 mbar, in other embodiments, the vacuum system may be adapted to maintain the pressure in the open chambers of the MRS extruder at pressures greater than, or less than, 1 mbar. For example, the vacuum system may be adapted to maintain this pressure at between about 0.5 mbar and about 12 mbar.

Similarly, although various embodiments of the systems described above may be adapted to produce carpet filament from substantially only recycled PET (so the resulting carpet filament would comprise, consist of, and/or consist essentially of recycled PET), in other embodiments, the system may be adapted to produce carpet filament from a combination of recycled PET and virgin PET. The resulting carpet filament may, for example, comprise, consist of, and/or consist essentially of between about 80% and about 100% recycled PET, and between about 0% and about 20% virgin PET.

Also, while various embodiments are discussed above in regard to producing carpet filament from PET, similar techniques may be used to produce carpet filament from other polymers. Similarly, while various embodiments are discussed above in regard to producing carpet filament from PET, similar techniques may be used to produce other products from PET or other polymers.

## Claims

1. A method of manufacturing PET nurdles, said method comprising:
providing a multi-screw extruder (400) comprising a multi-rotating screw section that comprises:
(i) a first satellite screw extruder, said first satellite screw extruder comprising a first satellite screw (425A-H) that is mounted to rotate about a central axis of said first satellite screw;
(ii) a second satellite screw extruder, said second satellite screw extruder comprising a second satellite screw (425A-H) that is mounted to rotate about a central axis of said second satellite screw; and
(iii) a pressure regulation system that is adapted to maintain a pressure within said first and second satellite screw extruders below about 18 millibars;
using said pressure regulation system to reduce a pressure within said first and second satellite screw extruders to below about 18 millibars;
while maintaining said pressure within said first and second satellite screw extruders below about 18 millibars, passing a melt comprising recycled PET through said multi-screw extruder (400) so that: (1) a first portion of said melt passes through said first satellite screw extruder, and (2) a second portion of said melt passes through said second satellite screw extruder;
after said step of passing said melt of recycled PET through said multi-screw extruder (400), pelletizing said polymer melt into a plurality of PET nurdles,
**characterized in that** pelletizing said polymer melt comprises:
passing said polymer melt through a cooling bath to form a plurality of polymer strands, said cooling bath is configured to maintain a temperature of between about 140 degrees Celsius and about 230 degrees Celsius within said cooling bath to at least partially harden said polymer melt into said plurality of polymer strands; and
after said step of passing said polymer melt through said cooling bath, forming said plurality of polymer strands into said plurality of PET nurdles.

2. The method of Claim 1, wherein said cooling bath is configured to maintain a temperature of about 180 degrees Celsius within said cooling bath.

3. The method of Claim 1 to 2, wherein said cooling bath is configured to at least partially crystallize said polymer melt.

4. The method of Claim 1 to 3, wherein said cooling bath comprises at least one surfactant.

5. The method of Claim 4, wherein said at least one surfactant is ethylene glycol trisiloxane, polyoxyethylene glycol monoalkyl ether with dodecanol or a phosphate based polyethylene oxide surfactants.

6. The method of any one of the claims 1 to 5, wherein the method further comprises the step of at least partially wiping residual water from the surface of the resulting polymer strand following the water bath cooling, but prior to forming said plurality of polymer strands into said plurality of PET nurdles.

7. The method of claim 6, wherein said at least partially wiping residual water from the surface of the resulting polymer strand is done by a suction air knife.

8. The method of Claim 1, wherein the satellite screws (425A-H) are arranged within a single screw drum (428) that is mounted to rotate about its central axis.

9. The method of Claim 8, wherein the satellite screws (425A-H) and the single screw drum (428) rotate in the same direction.

10. The method of Claim 8 or 9, wherein the single screw drum (428) rotates about four times faster than each individual satellite screw (425A-H).

11. The method of claim 1, wherein the satellite screws (425A-H) are housed within respective extruder barrels which are about 30% open to the outer chamber of the multi-rotating screw section (420).

## Patentansprüche

1. Verfahren zum Fertigen von PET-Granulat, wobei das Verfahren umfasst:
Bereitstellen eines Multischneckenextruders (400), umfassend einen Multirotationsschneckenabschnitt, welcher umfasst:
(i) einen ersten Satellitenschneckenextruder, wobei der erste Satellitenschneckenextruder eine erste Satellitenschnecke (425A-H) umfasst, die so montiert ist, dass sie um eine zentrale Achse der ersten Satellitenschnecke rotiert;
(ii) einen zweiten Satellitenschneckenextruder, wobei der zweite Satellitenschneckenextruder eine zweite Satellitenschnecke (425A-H) umfasst, die so montiert ist, dass sie um eine zentrale Achse der zweiten Satellitenschnecke rotiert; und
(iii) ein Druckregelungssystem, das vorgesehen ist, um einen Druck innerhalb des ersten und des zweiten Satellitenschneckenextruders unter etwa 18 Millibar zu halten;
wobei das Druckregelungssystem verwendet wird, um einen Druck innerhalb des ersten und des zweiten Satellitenschneckenextruders auf unter etwa 18 Millibar zu reduzieren;
Leiten einer Schmelze, die Recycling-PET umfasst, durch den Multischneckenextruder (400), während der Druck innerhalb des ersten und des zweiten Satellitenschneckenextruders unter etwa 18 Millibar gehalten wird, so dass (1) ein erster Anteil der Schmelze durch den ersten Satellitenschneckenextruder geleitet wird, und (2) ein zweiter Anteil der Schmelze durch den zweiten Satellitenschneckenextruder geleitet wird;
nach dem Schritt des Leitens der Schmelze aus Recycling-PET durch den Multischneckenextruder (400) Pelletieren der Polymerschmelze zu einer Vielzahl von PET-Granulat,
**dadurch gekennzeichnet, dass** das Pelletieren der Polymerschmelze umfasst:
Leiten der Polymerschmelze durch ein Kühlbad, um eine Vielzahl von Polymersträngen zu formen, wobei das Kühlbad ausgestaltet ist, um eine Temperatur zwischen etwa 140 Grad Celsius und etwa 230 Grad Celsius innerhalb des Kühlbads zu halten, um die Polymerschmelze mindestens teilweise zu der Vielzahl von Polymersträngen zu härten; und
nach dem Schritt des Leitens der Polymerschmelze durch das Kühlbad hindurch Formen der Vielzahl von Polymersträngen zu der Vielzahl von PET-Granulat.

2. Verfahren nach Anspruch 1, wobei das Kühlbad ausgestaltet ist, um eine Temperatur von etwa 180 Grad Celsius innerhalb des Kühlbads zu halten.

3. Verfahren nach Anspruch 1 oder 2, wobei das Kühlbad ausgestaltet ist, um die Polymerschmelze mindestens teilweise zu kristallisieren.

4. Verfahren nach Anspruch 1 bis 3, wobei das Kühlbad mindestens ein Tensid umfasst.

5. Verfahren nach Anspruch 4, wobei das mindestens eine Tensid Ethylenglykoltrisiloxan, Polyoxyethylenglykolmonoalkylether mit Dodecanol oder ein phosphatbasiertes Polyethylenoxid-Tensid ist.

6. Verfahren nach einem der Ansprüche 1 bis 5, wobei das Verfahren des Weiteren den Schritt des mindestens teilweise Abwischens von Restwasser von der Oberfläche des resultierenden Polymerstrangs nach dem Kühlen im Wasserbad, jedoch vor dem Formen der Vielzahl von Polymersträngen zu der Vielzahl von PET-Granulat umfasst.

7. Verfahren nach Anspruch 6, wobei das mindestens teilweise Abwischen von Restwasser von der Oberfläche des resultierenden Polymerstrangs durch ein Saugluftmesser durchgeführt wird.

8. Verfahren nach Anspruch 1, wobei die Satellitenschnecken (425A-H) innerhalb einer einzelnen Schneckentrommel (428) angeordnet sind, die so montiert ist, dass sie um ihre Zentralachse rotieren.

9. Verfahren nach Anspruch 8, wobei die Satellitenschnecken (425A-H) und die einzelne Schneckentrommel (428) in dieselbe Richtung rotieren.

10. Verfahren nach Anspruch 8 oder 9, wobei die einzelne Schneckentrommel (428) ungefähr vier Mal schneller rotiert als jede individuelle Satellitenschnecke (425A-H).

11. Verfahren nach Anspruch 1, wobei die Satellitenschnecken (425A-H) innerhalb jeweiliger Extruderzylinder untergebracht sind, die etwa 30 % offen zu der Außenkammer des Multirotationsschneckenabschnitts (420) sind.

## Revendications

1. Procédé de fabrication de pastilles de PET, ledit procédé comprenant le fait de :
procurer une extrudeuse à vis multiples (400) comprenant un tronçon multirotatif à vis, qui comprend :
(i) une première extrudeuse qui possède une vis à rouleau satellite, ladite première extrudeuse qui possède une vis à rouleau satellite comprenant une première vis à rouleau satellite (425A-H) qui est montée afin d'effectuer des rotations autour d'un axe central de ladite première vis à rouleau satellite ;
(ii) une deuxième extrudeuse qui possède une vis à rouleau satellite, ladite deuxième extrudeuse qui possède une vis à rouleau satellite comprenant une deuxième vis à rouleau satellite (425A-H) qui est montée afin d'effectuer des rotations autour d'un axe central de ladite deuxième vis à rouleau satellite ; et
(iii) un système de régulation de la pression qui est conçu pour maintenir une pression régnant au sein de ladite première et de ladite deuxième extrudeuse qui possèdent des vis à rouleaux satellites à une valeur inférieure à environ 18 mbar ;
utiliser ledit système de régulation de la pression dans le but de réduire une pression régnant au sein de ladite première et de ladite deuxième extrudeuse qui possèdent des vis à rouleaux satellites à une valeur inférieure à environ 18 mbar ;
tandis que l'on maintient ladite pression régnant au sein de ladite première et de ladite deuxième extrudeuse qui possèdent des vis à rouleaux satellites à une valeur inférieure à environ 18 mbar, faire passer une masse fondue qui comprend du PET recyclé à travers ladite extrudeuse à vis multiples (400) d'une manière telle que : (1) une première portion de ladite masse fondue passe à travers ladite première extrudeuse qui possède une vis à rouleau satellite et (2) une deuxième portion de ladite masse fondue passe à travers ladite deuxième extrudeuse qui possède une vis à rouleau satellite ;
après ladite étape au cours de laquelle on fait passer ladite masse fondue de PET recyclé à travers ladite extrudeuse à vis multiples (400), transformer en pastilles ladite masse fondue polymère afin d'obtenir un certain nombre de pastilles de PET ;
**caractérisé en ce que** ladite transformation en pastilles de ladite masse fondue polymère comprend le fait de :
faire passer ladite masse fondue polymère à travers un bain de refroidissement de façon à obtenir un certain nombre de brins polymères, ledit bain de refroidissement étant configuré pour maintenir une température à une valeur entre environ 140 °C et environ 230 °C au sein dudit bain de refroidissement dans le but de durcir au moins en partie ladite masse fondue polymère afin d'obtenir lesdits plusieurs brins polymères ; et
après ladite étape au cours de laquelle on fait passer ladite masse fondue polymère à travers ledit bain de refroidissement, transformer lesdits plusieurs brins polymères afin d'obtenir lesdites plusieurs pastilles de PET.

2. Procédé selon la revendication 1, dans lequel ledit bain de refroidissement est configuré pour maintenir une température d'environ 180 °C au sein dudit bain de refroidissement.

3. Procédé selon la revendication 1 ou 2, dans lequel ledit bain de refroidissement est configuré pour cristalliser au moins en partie ladite masse fondue polymère.

4. Procédé selon l'une quelconque des revendications 1 à 3, dans lequel ledit bain de refroidissement comprend au moins un agent tensioactif.

5. Procédé selon la revendication 4, dans lequel ledit au moins un agent tensioactif représente un agent tensioactif de trisiloxane à base d'éthylène glycol, d'éther monoalkylique de polyoxyéthylène glycol avec du dodécanol ou d'un oxyde de polyéthylène à base de phosphate.

6. Procédé selon l'une quelconque des revendications 1 à 5, dans lequel le procédé comprend en outre l'étape dans laquelle on élimine par essuyage au moins en partie l'eau résiduelle à partir de la surface des brins polymères résultants à la suite du bain de refroidissement aqueux, mais avant la transformation desdits plusieurs brins polymères pour obtenir lesdites plusieurs pastilles de PET.

7. Procédé selon la revendication 6, dans lequel l'élimination par essuyage au moins en partie de l'eau résiduelle à partir de la surface du brin polymère résultant est mise en œuvre au moyen d'une lame d'air d'aspiration.

8. Procédé selon la revendication 1, dans lequel les vis à rouleaux satellites (425A-H) sont disposées au sein d'un tambour à vis unique (428) qui est monté dans le but d'effectuer des rotations autour de son axe central.

9. Procédé selon la revendication 8, dans lequel les vis à rouleaux satellites (425A-H) et le tambour à vis unique (428) tournent dans la même direction.

10. Procédé selon la revendication 8 ou 9, dans lequel le tambour à vis unique (428) tourne quatre fois plus vite que chaque vis individuelle à rouleau satellite (425A-H).

11. Procédé selon la revendication 1, dans lequel les vis à rouleaux satellites (425A-H) sont logées au sein de cylindres d'extrudeuses respectifs qui sont ouverts à concurrence d'environ 30 % sur la chambre externe du tronçon multirotatif à vis (420).
